# EUROPEAN PATENT SPECIFICATION

(11) **EP 4 434 811 B1**
(45) Date of publication and mention of the grant of the patent: **11.11.2026**
(21) Application number: 24165097.7
(22) Date of filing: 21.03.2024
(51) Int. Cl.: B60Q 1/068, B60Q 1/26, B60Q 1/00

(54) **LIGHTING APPARATUS WITH ADJUSTABILITY BETWEEN TWO LIGHTING STRUCTURES AND METHOD OF USE**
BELEUCHTUNGSVORRICHTUNG MIT VERSTELLBARKEIT ZWISCHEN ZWEI BELEUCHTUNGSSTRUKTUREN UND VERWENDUNGSVERFAHREN
APPAREIL D'ÉCLAIRAGE AVEC RÉGLAGE ENTRE DEUX STRUCTURES D'ÉCLAIRAGE ET PROCÉDÉ D'UTILISATION

(30) Priority: 21.03.2023 US 202363491430 P
(43) Date of publication of application: 25.09.2024
(73) Proprietor: Flex-N-Gate Advanced Product Development, LLC, Windsor, ON N9A 5K3 (CA)
(72) Inventor: de JD Melhado-Moya, Felipe, Windsor, N9A 5K3 (CA)
(74) Representative: Dehns Germany Partnerschaft mbB

(56) References cited:
- EP-A1- 3 680 548
- EP-B1- 2 906 871
- DE-B4- 4 418 135
- US-A1- 2011 317 444
- US-A1- 2013 215 632

## Description

### CROSS-REFERENCE TO RELATED APPLICATIONS

This application claims the benefit of priority of U.S. Provisional Patent Application No. 63/491,430, filed on March 21, 2023.

### BACKGROUND

### 1. FIELD

Embodiments of the invention relate to lighting systems, and in particular to a lighting apparatus with at least two structures secured together with a flexible connector to provide adjustability of one structure relative to the second structure.

### 2. RELATED ART

Vehicle lighting systems are known in the art. For example, U.S. Patent No. US6969184B2 to Bergman et al. discloses an adjustable vehicle headlamp with a threaded adjustment mechanism for adjusting a position of the headlamp and therefore the direction of light. U.S. Patent No. US4675793A to Capellari et al. discloses an adjustable headlight with a rotatable connector for adjusting both the horizontal and vertical orientation of a reflector. U.S. Patent No. US5095411A to Peck et al. discloses a headlamp adjustment assembly with an adjustment means for altering a position of the reflector within a casing to adjust the headlight beam. DE4418135B4 discloses a vehicle headlamp including a housing, a light source and a reflector having a rigid part and a flexible part. In an embodiment, the rigid part of the reflector is mounted to the housing via a mounting structure with a pivot point. US 2011/0317444 A1 discloses a vehicle headlight having a cover for the actual lamp of the headlight, a housing and an adjustment mechanism at its lower part, the adjustment mechanism being connectable to a frame. The adjustment mechanism comprises an adjustment block, an adjustment base, an elastic element, and an adjustment bolt. The adjustment base is connected to the lower part of the frame. The adjustment mechanism is configured to mount the lamp to the frame and to adjust the lamp in relation to the frame.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter. The invention is defined by the appended claims. Other aspects and advantages of the invention will be apparent from the following detailed description of the embodiments and the accompanying drawing figures.

According to the present invention, a lighting apparatus for use with a vehicle includes: a frame forming an opening between at least a first side and a second side; a first lighting structure fixedly secured within the opening of the frame; a second lighting structure positioned within the opening and connected to the first lighting structure via a connector; and an adjustment device engaged with the second lighting structure, the adjustment device configured to apply force to the second lighting structure such that the connector flexes and allows the second lighting structure to adjust relative to the first lighting structure to move between a first position and a second position.

According to the present invention, the first lighting structure is integral with the frame, the first lighting structure connected to the frame on at least three sides.

In certain aspects, the first lighting structure is immovable relative to the frame.

In certain aspects, the connector further includes a body positioned between the first lighting structure and the second lighting structure, the body having a first edge connected to the first lighting structure and a second edge connected to the second lighting structure, the body configured to flex as the second lighting structure is adjusted relative to the first lighting structure.

In certain aspects, the first lighting structure, the second lighting structure, and the connector are manufactured as a single unit.

In certain aspects, the adjustment device further includes: a fastener mount extending from the frame; a receiver extending from the second lighting structure; and a threaded fastener extending between the receiver and the fastener mount; wherein rotation of the threaded fastener applies force to the second lighting structure.

In certain aspects, the first lighting structure, the second lighting structure, the connector, the fastener mount, and the receiver are manufactured as a single unit.

In certain aspects, the first lighting structure further includes a first reflector positioned adjacent to a first light engine and a second reflector positioned adjacent to a second light engine, wherein the first reflector and the second reflector are configured to reflect light outward from the lighting apparatus.

According to the present invention, a method of adjusting a lighting apparatus includes: manufacturing the lighting apparatus having a frame forming an opening between at least a first side and a second side, a first lighting structure fixedly secured within the opening of the frame, a second lighting structure positioned within the opening and connected to the first lighting structure via a connector, and an adjustment device engaged with the second lighting structure; installing the lighting apparatus into an environment of a vehicle, wherein the first lighting structure is in a fixed position relative to the frame and the second lighting structure is in a first position relative to the first lighting structure; testing the lighting apparatus by activating light and observing where the light is cast from the first lighting structure and the second lighting structure; adjusting the second lighting structure into a second position relative to the first lighting structure via the adjustment device, wherein the connector flexes due to force applied from the adjustment device through the second lighting structure and to the connector, thereby allowing the second lighting structure to move into the second position.

In certain aspects, manufacturing the lighting apparatus further includes manufacturing the frame, the first lighting structure, the second lighting structure, and the connector into a single unit.

According to the present invention, the first lighting structure is integral with the frame and connected to the frame on at least three sides.

In certain aspects, the connector further includes a body positioned between the first lighting structure and the second lighting structure, the body having a first edge connected to the first lighting structure and a second edge connected to the second lighting structure, the body configured to flex as the second lighting structure is adjusted relative to the first lighting structure.

In certain aspects, the adjustment device further includes: a fastener mount extending from the frame; a receiver extending from the second lighting structure; and a threaded fastener extending between the receiver and the fastener mount; wherein rotation of the threaded fastener applies force to the second lighting structure.

In certain aspects, the frame, the first lighting structure, the second lighting structure, the connector, the fastener mount, and the receiver are manufactured as a single unit.

In certain aspects, adjusting the second lighting structure further includes one selected from a group consisting of: tightening the threaded fastener such that the fastener pulls the receiver toward the fastener mount; and loosening the threaded fastener such that the fastener retracts the receiver away from the fastener mount.

### BRIEF DESCRIPTION OF THE DRAWING FIGURES

Embodiments of the invention are described in detail below with reference to the attached drawing figures, wherein:
FIG. 1 is a front view of an embodiment of a lighting apparatus in accordance with the present invention.
FIG. 2 is a front angled view of the lighting apparatus of FIG. 1.
FIG. 3 is a back angled view of the lighting apparatus of FIG. 1.
FIG. 4 is a back angled, cross-sectional view taken from line 4 of FIG. 3.
FIG. 5 is a flowchart of a method of using and adjusting the lighting apparatus of FIG. 1.

The drawing figures do not limit the invention to the specific embodiments disclosed and described herein. The drawings are not necessarily to scale, emphasis instead being placed upon clearly illustrating the principles of the invention.

### DETAILED DESCRIPTION

The following detailed description references the accompanying drawings that illustrate specific embodiments in which the invention can be practiced. The embodiments are intended to describe aspects of the invention in sufficient detail to enable those skilled in the art to practice the invention. Other embodiments can be utilized and changes can be made without departing from the scope of the invention as defined by the appended claims. The following detailed description is, therefore, not to be taken in a limiting sense. The scope of the invention is defined only by the appended claims.

In this description, references to "one embodiment," "an embodiment," or "embodiments" mean that the feature or features being referred to are included in at least one embodiment of the technology. Separate references to "one embodiment," "an embodiment," or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments but is not necessarily included. Thus, the technology can include a variety of combinations and/or integrations of the embodiments described herein.

Lighting systems are well known in the art and include a variety of lighting apparatuses specifically designed for motor vehicles. These include headlights, taillights, interior lights, door lights, etcetera. Headlights for vehicles may be classified as either reflectors or projectors and function to reflect or project light onto a roadway during less-than-ideal driving conditions, such as low light. Headlights, and other lighting apparatuses, usually require a form of adjustability to direct the light beam to desired locations. For example, depending on the vehicle, a light beam may need to be adjusted for optimal visibility and safety. This may be done during a manufacturing stage, installation stage, or even after market of the vehicle. Conventional systems may utilize a plurality of components, manufactured separately, to create a complete system with one or more means of adjustability.

As is known in the art, systems and apparatuses that require multiple manufactured components, and/or multiple connection points for providing adjustability, are lacking in efficiency. Accordingly, designs configured to reduce a number of components or steps of manufacturing improve efficiency.

The present invention is directed toward a lighting apparatus which includes a frame for mounting the lighting apparatus in a desired environment, such as within a headlight casing of a vehicle. A first lighting structure is fixedly secured within and to the frame, and a second lighting structure is substantially disconnected from the frame and secured to the first lighting structure via a flexible connector. The second lighting structure is adjustable relative to the first lighting structure via an adjustment device. In other words, the second lighting structure is manipulated in position due to being connected to the first lighting structure, while being substantially free from other points of connection (i.e. to the frame). In embodiments, the adjustment device is a threaded fastener configured to manipulate the second lighting structure such that the connector between the two lighting structures flexes as needed to allow for movement of the second lighting structure.

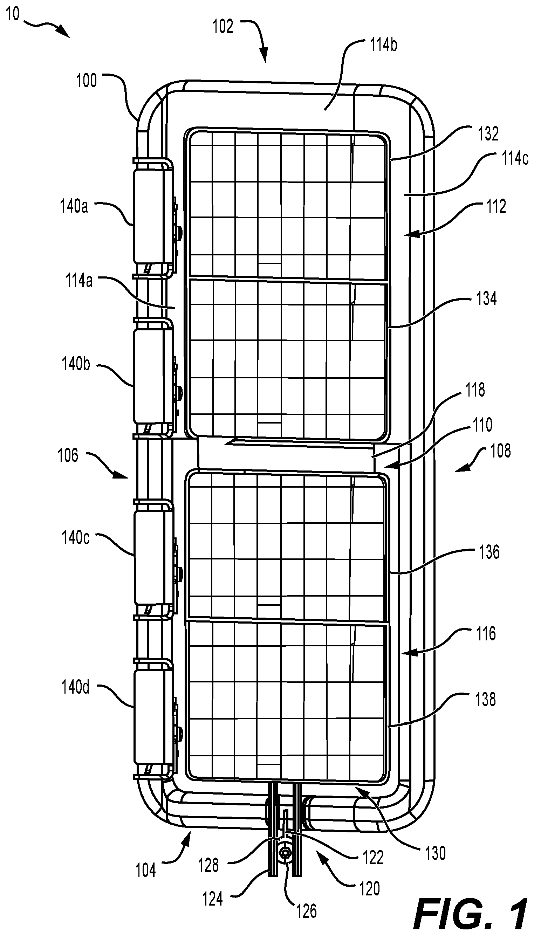

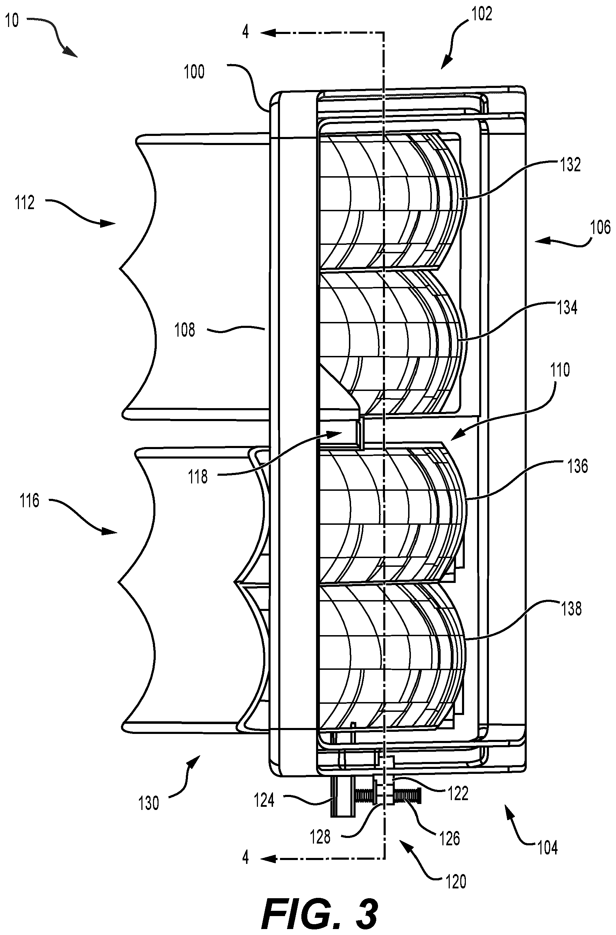

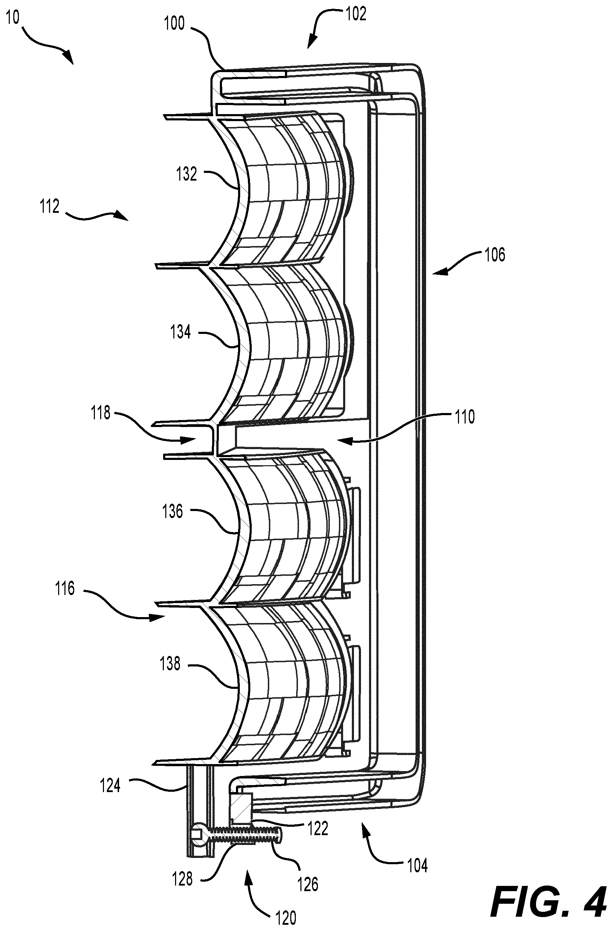

FIGS. 1 through 4 depict a lighting apparatus 10 in accordance with the present invention. Apparatus 10 includes a frame 100 extending from a top end 102 to a bottom end 104 and from a first side 106 to a second side 108. The frame 100 forms a central opening 110 and can vary in shape and size as would be appropriate for a variety of installation environments of the lighting apparatus 10. The frame 100 provides a structure for mounting to a desired installation site, such as a headlamp cavity of a vehicle, wherein the frame 100 may receive installation hardware, such as screws, bolts, adhesives, etc.

Apparatus 10 further includes a first lighting structure 112 fixedly secured to the frame 100 within the opening 110. As shown, the first lighting structure 112 is fully integral with the frame 100 such that the structure 112 is connected on three sides 114a-c to the frame 100. Accordingly, the structure 112 is immovable relative to the frame 100 and is in a fixed position once the frame 100 is mounted. Although the contact locations between the structure 112 and the frame 100 are shown as solid connections, it is contemplated that gaps, openings, or other variations may be implemented so long as the structure 112 remains fixed.

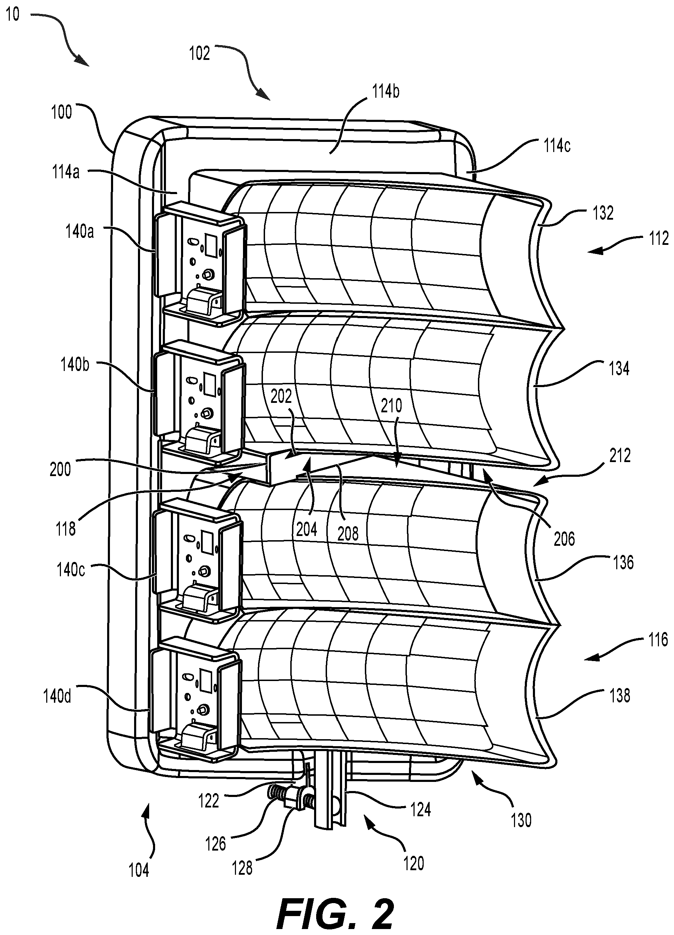

A second lighting structure 116 is positioned substantially within the opening of the frame 100 and is secured to and extends from the first lighting structure 112 via a connector 118. Structure 116 is substantially free from the frame 100 which allows for the structure 116 to move and flex via the connector 118. In embodiments, the connector 118 is composed of a material and structured in such a way as to provide flexible movement between the structures 112, 116. As best shown in FIG 2, the connector 118 includes a body 200 that forms a top edge 202 which travels along a bottom surface 204 of a bottom end 206 of the first structure 112. Further, the connector 118 includes a bottom edge 208 which travels along a top surface 210 of a top end 212 of the second structure 116. This configuration uses enough contact surface of the connector 118 to prevent damage or breaking of the connector 118, while still allowing for a flexible connection between the two structures 114, 116.

In embodiments, the apparatus 10 further includes an adjustment device 120 mounted to the frame 100 and the second structure 116. The adjustment device 120, in embodiments, includes a fastener mount 122 rigidly secured to and extending from the frame 100, a receiver 124 extending from the second structure 116, and a threaded fastener 126 (e.g. screws and bolts) engaged with the fastener mount 122 and the receiver 124 such that adjustment/rotation of the fastener 126 manipulates the second structure 116 via the receiver 124. The mount 122, in embodiments, extends from the bottom end 104 of the frame 100 and includes a threaded portion 128, which may be C-shaped as shown, or may vary in shape as would be understood by those skilled in the art, and engages with the threads of the fastener 126 as the fastener 126 rotates. The receiver 124 is rigidly affixed to the second structure 116 and in embodiments, extends from a bottom end 130, such that as the fastener 126 rotates and therefore applies force to the second structure 116, the second structure 116 will flex/bend about the connector 118 to move into a new position. For example, as the fastener 126 is tightened, the bottom end 130 will be pulled closer to the frame 100, thereby altering the location of the structure 116 and an angle of light projection or reflection. The adjustment device 120, in combination with the connector 118, allows for the second structure 116 to be micro-adjusted relative to the first structure 112.

In embodiments, the first structure 112, second structure 116, connector 118, mount 122, and receiver 124 are all manufactured as a single unit out of a single material, such as through injection molding or other manufacturing practices. The material used would be any material appropriate as selected by those skilled in the art, such as one or more plastics. This improves efficiency of the manufacturing process, while still providing a means to adjust the lighting apparatus 10.

Those skilled in the art would understand that the lighting apparatus 10 may vary, while still incorporating the adjustment device 120 and connector 118 discussed above. Specifically, the lighting apparatus 10 may be a headlamp or other vehicle lighting apparatus and may further vary in design, such as through use of reflector components or projector components.

For purposes of explanation, in the embodiment of the lighting apparatus 10 shown, the first structure 112 is a first set of reflectors, namely a first reflector 132 and a second reflector 134, and the second structure 116 includes a second set of reflectors, namely a third reflector 136 and a fourth reflector 138. The reflectors may vary and may be substantially concave with a surface treatment, such as a plurality of reflective surfaces, to create reflection of light outward to at a specific point onto the road, making a proper beam pattern in front of the vehicle.

In embodiments, a plurality of light engines 140a-d are mounted to the apparatus 10, such as to the frame 100 or to the structures 112, 116, and are positioned adjacent to each reflector such that the light engines coordinate to reflectors to emit light thereon. The light engines 140a-d provide mounting locations and surfaces for mounting necessary electrical components, such as LEDs, circuit boards, etcetera.

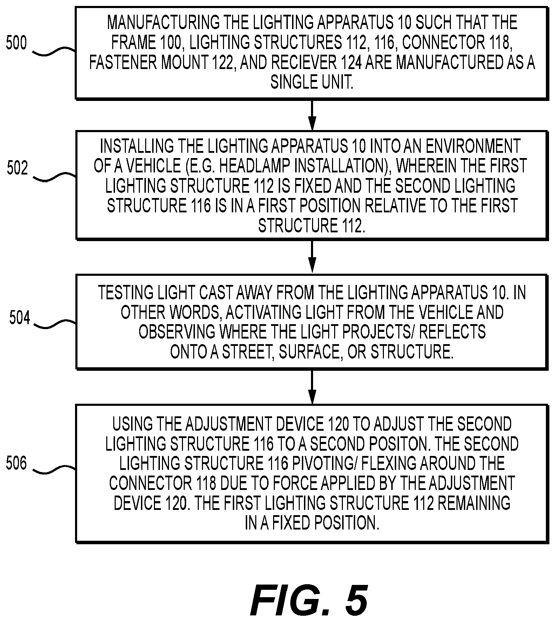

In FIG. 5, a flowchart reiterates the method of using the lighting apparatus 10. At step 500, the lighting apparatus 10 is manufactured, which includes selecting design specifications appropriate for an intended mounting environment (e.g. make and model of vehicle), and the apparatus 10 is manufactured with the frame 100, lighting structures 112, 116, connector 118, fastener mount 122, and receiver 124 as a single unit. In other words, these components are manufactured into an integral single body, such as through injection molding or other suitable manufacturing activities. The limited use of parts secured together improves efficiency associated with manufacturing the apparatus 10.

At step 502, the manufactured apparatus 10 is installed into the appropriate environment (e.g. as a headlamp into a vehicle), wherein the first lighting structure 112 is fixed relative to the frame 100 and the second lighting structure 116 is in a first position relative to the first lighting structure 112.

At step 504, the lighting apparatus 10 is tested. Specifically, light is activated, such that the light structures 112, 116 cast the light onto a surface such as a road, or onto a structure such as a building. Accordingly, the projection/reflection of light is observed and evaluated to determine if the positioning of the first and second structures 112, 116 are appropriate for use.

At step 506, in the event that the testing step reveals that adjustments are desired, the adjustment device 120 is used to make adjustments to the second lighting structure 116 such that the structure 116 is adjusted into a second position. As discussed above, the first lighting structure 112 remains fixed relative to the frame 100, and the adjustment device 120 is configured to apply or remove force to the second structure 116 such that it pivots or flexes about the connector 118 into the second position. In other words, the threaded fastener may be tightened or loosened as needed to make said adjustment. Steps 504 and 506 may be repeated any number of times to adjust the structure 116 into a needed position.

Those skilled in the art will appreciate the novel features of the present invention, namely the use of a flexible connector between two or more structures used for lighting, wherein the flexible connector allows for adjustment of one structure relative to the other, the other being in a fixed configuration. The adjustment device may vary but will provide for micro adjustability between the two structures, which in embodiments, is completed during a manufacturing stage.

Although the invention has been described with reference to the embodiments illustrated in the attached drawing figures, it is noted that the scope of the invention is only defined in the appended claims.

Having thus described various embodiments of the invention, what is claimed as new and desired to be protected is defined in the appended claims:

## Claims

1. A lighting apparatus (10) for use with a vehicle, the lighting apparatus comprising:
a frame (100) forming an opening between at least a first side (106) and a second side (108);
a first lighting structure (112) fixedly secured within the opening of the frame;
a second lighting structure (116) positioned within the opening and connected to the first lighting structure via a connector (118); and
an adjustment device (120) engaged with the second lighting structure, the adjustment device configured to apply force to the second lighting structure such that the connector flexes and allows the second lighting structure to adjust relative to the first lighting structure to move between a first position and a second position;
wherein the first lighting structure (112) and the second lighting structure (116) are each configured to cast light therefrom, **characterized in that** the first lighting structure (112) is integral with the frame (100), the first lighting structure being connected to the frame on at least three sides.

2. The lighting apparatus of claim 1, wherein the first lighting structure (112) is immovable relative to the frame (100).

3. The lighting apparatus of claim 1 or 2, wherein the connector (118) further comprises a body (200) positioned between the first lighting structure and the second lighting structure, the body having a first edge (202) connected to the first lighting structure (112) and a second edge (208) connected to the second lighting structure (116), the body configured to flex as the second lighting structure is adjusted relative to the first lighting structure.

4. The lighting apparatus of any one of the preceding claims, wherein the frame, the first lighting structure, the second lighting structure, and the connector are manufactured into an integral single body.

5. The lighting apparatus of any one of the preceding claims, wherein the adjustment device (120) further comprises:
a fastener mount (122) extending from the frame;
a receiver (124) extending from the second lighting structure; and
a threaded fastener (126) extending between the receiver and the fastener mount;
wherein rotation of the threaded fastener applies force to the second lighting structure.

6. The lighting apparatus of claim 5, wherein the frame, the first lighting structure, the second lighting structure, the connector, the fastener mount, and the receiver are manufactured into an integral single body.

7. The lighting apparatus of any one of the preceding claims, wherein the first lighting structure further comprises a first reflector (132) positioned adjacent to a first light engine and a second reflector (134) positioned adjacent to a second light engine, wherein the first reflector and the second reflector are configured to reflect light outward from the lighting apparatus.

8. A method of adjusting a lighting apparatus (10), the method comprising:
manufacturing the lighting apparatus (10) having a frame (100) forming an opening between at least a first side (106) and a second side (108), a first lighting structure (112) fixedly secured within the opening of the frame (100), a second lighting structure (116) positioned within the opening and connected to the first lighting structure (112) via a connector (118), the first lighting structure (112) and the second lighting structure (116) each being configured to cast light therefrom, and an adjustment device (120) engaged with the second lighting structure (116), wherein the first lighting structure is integral with the frame and connected to the frame on at least three sides;
installing the lighting apparatus into an environment of a vehicle, wherein the first lighting structure is in a fixed position relative to the frame and the second lighting structure is in a first position relative to the first lighting structure;
testing the lighting apparatus by activating light and observing where the light is cast from each of the first lighting structure and the second lighting structure;
adjusting the second lighting structure into a second position relative to the first lighting structure via the adjustment device, wherein the connector flexes due to force applied from the adjustment device through the second lighting structure and to the connector, thereby allowing the second lighting structure to move into the second position.

9. The method of claim 8, wherein manufacturing the lighting apparatus further comprises manufacturing the frame, the first lighting structure, the second lighting structure, and the connector into an integral single body.

10. The method of claim 8 or 9, wherein the connector (118) further comprises a body (200) positioned between the first lighting structure and the second lighting structure, the body having a first edge (202) connected to the first lighting structure (112) and a second edge (208) connected to the second lighting structure (116), the body configured to flex as the second lighting structure is adjusted relative to the first lighting structure.

11. The method of any one of claims 8 to 10, wherein the adjustment device further comprises:
a fastener mount (122) extending from the frame;
a receiver (124) extending from the second lighting structure; and
a threaded fastener (126) extending between the receiver and the fastener mount;
wherein rotation of the threaded fastener applies force to the second lighting structure.

12. The method of claim **11,** wherein the frame, the first lighting structure, the second lighting structure, the connector, the fastener mount, and the receiver are manufactured into an integral single body.

13. The method of claim 11 or 12, wherein adjusting the second lighting structure further comprises one selected from a group consisting of:
tightening the threaded fastener such that the fastener pulls the receiver toward the fastener mount; and
loosening the threaded fastener such that the fastener retracts the receiver away from the fastener mount.

## Patentansprüche

1. Eine Beleuchtungsvorrichtung (10) zur Verwendung mit einem Fahrzeug, wobei die Beleuchtungsvorrichtung umfasst:
einen Rahmen (100), der eine Öffnung zwischen mindestens einer ersten Seite (106) und einer zweiten Seite (108) bildet;
eine erste Beleuchtungsstruktur (112), die fest in der Öffnung des Rahmens befestigt ist;
eine zweite Beleuchtungsstruktur (116), die in der Öffnung positioniert und über einen Verbinder (118) mit der ersten Beleuchtungsstruktur verbunden ist; und
eine Einstellvorrichtung (120), die mit der zweiten Beleuchtungsstruktur in Eingriff steht, wobei die Einstellvorrichtung so ausgelegt ist, dass sie Kraft auf die zweite Beleuchtungsstruktur ausübt, sodass sich der Verbinder verbiegt und es der zweiten Beleuchtungsstruktur ermöglicht, sich relativ zur ersten Beleuchtungsstruktur zwischen einer ersten Position und einer zweiten Position zu bewegen;
wobei die erste Beleuchtungsstruktur (112) und die zweite Beleuchtungsstruktur (116) jeweils so ausgelegt sind, dass sie Licht abgeben, **dadurch gekennzeichnet, dass** die erste Beleuchtungsstruktur (112) einstückig mit dem Rahmen (100) verbunden ist, wobei die erste Beleuchtungsstruktur mit dem Rahmen an mindestens drei Seiten verbunden ist.

2. Beleuchtungsvorrichtung nach Anspruch 1, wobei die erste Beleuchtungsstruktur (112) relativ zum Rahmen (100) unbeweglich ist.

3. Beleuchtungsvorrichtung nach Anspruch 1 oder 2, wobei der Verbinder (118) weiterhin einen Körper (200) umfasst, der zwischen der ersten Beleuchtungsstruktur und der zweiten Beleuchtungsstruktur positioniert ist, wobei der Körper eine erste Kante (202), die mit der ersten Beleuchtungsstruktur (112) verbunden ist, und eine zweite Kante (208), die mit der zweiten Beleuchtungsstruktur (116) verbunden ist, aufweist, wobei der Körper so ausgelegt ist, dass er sich verbiegt, wenn die zweite Beleuchtungsstruktur relativ zur ersten Beleuchtungsstruktur eingestellt wird.

4. Beleuchtungsvorrichtung nach einem der vorhergehenden Ansprüche, wobei der Rahmen, die erste Beleuchtungsstruktur, die zweite Beleuchtungsstruktur und der Verbinder zu einem einstückigen Körper gefertigt sind.

5. Beleuchtungsvorrichtung nach einem der vorhergehenden Ansprüche, wobei die Einstellvorrichtung (120) weiterhin umfasst:
eine Befestigungsmontage (122), die sich vom Rahmen erstreckt;
eine Aufnahme (124), die sich von der zweiten Beleuchtungsstruktur erstreckt; und
ein Gewindebefestigungselement (126), das sich zwischen der Aufnahme und der Befestigungsmontage erstreckt;
wobei eine Drehung des Gewindebefestigungselements Kraft auf die zweite Beleuchtungsstruktur ausübt.

6. Beleuchtungsvorrichtung nach Anspruch 5, wobei der Rahmen, die erste Beleuchtungsstruktur, die zweite Beleuchtungsstruktur, der Verbinder, die Befestigungsmontage und die Aufnahme zu einem einstückigen Körper gefertigt sind.

7. Beleuchtungsvorrichtung nach einem der vorhergehenden Ansprüche, wobei die erste Beleuchtungsstruktur weiterhin einen ersten Reflektor (132), der benachbart zu einer ersten Lichtquelle positioniert ist, und einen zweiten Reflektor (134), der benachbart zu einer zweiten Lichtquelle positioniert ist, umfasst, wobei der erste Reflektor und der zweite Reflektor so ausgelegt sind, dass sie Licht von der Beleuchtungsvorrichtung nach außen reflektieren.

8. Verfahren zum Einstellen einer Beleuchtungsvorrichtung (10), wobei das Verfahren umfasst:
Herstellen der Beleuchtungsvorrichtung (10) mit einem Rahmen (100), der eine Öffnung zwischen mindestens einer ersten Seite (106) und einer zweiten Seite (108) bildet, einer ersten Beleuchtungsstruktur (112), die fest in der Öffnung des Rahmens (100) befestigt ist,
einer zweiten Beleuchtungsstruktur (116), die in der Öffnung positioniert und über einen Verbinder (118) mit der ersten Beleuchtungsstruktur (112) verbunden ist, wobei die erste Beleuchtungsstruktur (112) und die zweite Beleuchtungsstruktur (116) jeweils so ausgelegt sind, dass sie Licht abgeben, und einer Einstellvorrichtung (120), die mit der zweiten Beleuchtungsstruktur (116) in Eingriff steht, wobei die erste Beleuchtungsstruktur einstückig mit dem Rahmen verbunden ist und mit dem Rahmen an mindestens drei Seiten verbunden ist;
Einbauen der Beleuchtungsvorrichtung in eine Umgebung eines Fahrzeugs, wobei sich die erste Beleuchtungsstruktur in einer festen Position relativ zum Rahmen befindet und sich die zweite Beleuchtungsstruktur in einer ersten Position relativ zur ersten Beleuchtungsstruktur befindet;
Testen der Beleuchtungsvorrichtung durch Aktivieren von Licht und Beobachten, wohin das Licht von der ersten Beleuchtungsstruktur und der zweiten Beleuchtungsstruktur abgestrahlt wird;
Einstellen der zweiten Beleuchtungsstruktur in eine zweite Position relativ zur ersten Beleuchtungsstruktur über die Einstellvorrichtung, wobei sich der Verbinder aufgrund der Kraft, die von der Einstellvorrichtung durch die zweite Beleuchtungsstruktur auf den Verbinder ausgeübt wird, verbiegt und es der zweiten Beleuchtungsstruktur ermöglicht, sich in die zweite Position zu bewegen.

9. Verfahren nach Anspruch 8, wobei das Herstellen der Beleuchtungsvorrichtung weiterhin das Fertigen des Rahmens, der ersten Beleuchtungsstruktur, der zweiten Beleuchtungsstruktur und des Verbinders zu einem einstückigen Körper umfasst.

10. Verfahren nach Anspruch 8 oder 9, wobei der Verbinder (118) weiterhin einen Körper (200) umfasst, der zwischen der ersten Beleuchtungsstruktur und der zweiten Beleuchtungsstruktur positioniert ist, wobei der Körper eine erste Kante (202), die mit der ersten Beleuchtungsstruktur (112) verbunden ist, und eine zweite Kante (208), die mit der zweiten Beleuchtungsstruktur (116) verbunden ist, aufweist, wobei der Körper so ausgelegt ist, dass er sich verbiegt, wenn die zweite Beleuchtungsstruktur relativ zur ersten Beleuchtungsstruktur eingestellt wird.

11. Verfahren nach einem der Ansprüche 8 bis 10, wobei die Einstellvorrichtung weiterhin umfasst:
eine Befestigungsmontage (122), die sich vom Rahmen erstreckt;
eine Aufnahme (124), die sich von der zweiten Beleuchtungsstruktur erstreckt; und
ein Gewindebefestigungselement (126), das sich zwischen der Aufnahme und der Befestigungsmontage erstreckt;
wobei eine Drehung des Gewindebefestigungselements Kraft auf die zweite Beleuchtungsstruktur ausübt.

12. Verfahren nach Anspruch 11, wobei der Rahmen, die erste Beleuchtungsstruktur, die zweite Beleuchtungsstruktur, der Verbinder, die Befestigungsmontage und die Aufnahme zu einem einstückigen Körper gefertigt sind

13. Verfahren nach Anspruch 11 oder 12, wobei das Einstellen der zweiten Beleuchtungsstruktur weiterhin eines der folgenden umfasst:
Festziehen des Gewindebefestigungselements, sodass das Befestigungselement die Aufnahme in Richtung der Befestigungsmontage zieht; und
Lockern des Gewindebefestigungselements, sodass das Befestigungselement die Aufnahme von der Befestigungsmontage zurückzieht.

## Revendications

1. Un appareil d'éclairage (10) destiné à être utilisé avec un véhicule, l'appareil d'éclairage comprenant :
un cadre (100) formant une ouverture entre au moins un premier côté (106) et un deuxième côté (108) ;
une première structure d'éclairage (112) fixée de manière fixe à l'intérieur de l'ouverture du cadre ;
une deuxième structure d'éclairage (116) positionnée à l'intérieur de l'ouverture et connectée à la première structure d'éclairage par l'intermédiaire d'un connecteur (118) ; et
un dispositif de réglage (120) engagé avec la deuxième structure d'éclairage, le dispositif de réglage étant configuré pour appliquer une force à la deuxième structure d'éclairage de sorte que le connecteur fléchisse et permette à la deuxième structure d'éclairage de s'ajuster par rapport à la première structure d'éclairage pour se déplacer entre une première position et une deuxième position ;
dans lequel la première structure d'éclairage (112) et la deuxième structure d'éclairage (116) sont chacune configurées pour émettre de la lumière, **caractérisé en ce que** la première structure d'éclairage (112) est solidaire du cadre (100), la première structure d'éclairage étant connectée au cadre sur au moins trois côtés.

2. L'appareil d'éclairage selon la revendication 1, dans lequel la première structure d'éclairage (112) est immobile par rapport au cadre (100).

3. L'appareil d'éclairage selon la revendication 1 ou 2, dans lequel le connecteur (118) comprend en outre un corps (200) positionné entre la première structure d'éclairage et la deuxième structure d'éclairage, le corps ayant un premier bord (202) connecté à la première structure d'éclairage (112) et un deuxième bord (208) connecté à la deuxième structure d'éclairage (116), le corps étant configuré pour fléchir lorsque la deuxième structure d'éclairage est ajustée par rapport à la première structure d'éclairage.

4. L'appareil d'éclairage selon l'une quelconque des revendications précédentes, dans lequel le cadre, la première structure d'éclairage, la deuxième structure d'éclairage et le connecteur sont fabriqués en un seul corps monobloc.

5. L'appareil d'éclairage selon l'une quelconque des revendications précédentes, dans lequel le dispositif de réglage (120) comprend en outre :
un support de fixation (122) s'étendant depuis le cadre ;
un récepteur (124) s'étendant depuis la deuxième structure d'éclairage ; et
un élément de fixation fileté (126) s'étendant entre le récepteur et le support de fixation ;
dans lequel la rotation de l'élément de fixation fileté applique une force à la deuxième structure d'éclairage.

6. L'appareil d'éclairage selon la revendication 5, dans lequel le cadre, la première structure d'éclairage, la deuxième structure d'éclairage, le connecteur, le support de fixation et le récepteur sont fabriqués en un seul corps monobloc.

7. L'appareil d'éclairage selon l'une quelconque des revendications précédentes, dans lequel la première structure d'éclairage comprend en outre un premier réflecteur (132) positionné adjacent à un premier moteur lumineux et un deuxième réflecteur (134) positionné adjacent à un deuxième moteur lumineux, dans lequel le premier réflecteur et le deuxième réflecteur sont configurés pour réfléchir la lumière vers l'extérieur de l'appareil d'éclairage.

8. Un procédé de réglage d'un appareil d'éclairage (10), le procédé comprenant :
la fabrication de l'appareil d'éclairage (10) ayant un cadre (100) formant une ouverture entre au moins un premier côté (106) et un deuxième côté (108), une première structure d'éclairage (112) fixée de manière fixe à l'intérieur de l'ouverture du cadre (100), une deuxième structure d'éclairage (116) positionnée à l'intérieur de l'ouverture et connectée à la première structure d'éclairage (112) par l'intermédiaire d'un connecteur (118), la première structure d'éclairage (112) et la deuxième structure d'éclairage (116) étant chacune configurées pour émettre de la lumière, et un dispositif de réglage (120) engagé avec la deuxième structure d'éclairage (116), dans lequel la première structure d'éclairage est solidaire du cadre et connectée au cadre sur au moins trois côtés ;
l'installation de l'appareil d'éclairage dans un environnement d'un véhicule, dans lequel la première structure d'éclairage est dans une position fixe par rapport au cadre et la deuxième structure d'éclairage est dans une première position par rapport à la première structure d'éclairage ;
le test de l'appareil d'éclairage en activant la lumière et en observant où la lumière est émise depuis chacune de la première structure d'éclairage et de la deuxième structure d'éclairage ;
le réglage de la deuxième structure d'éclairage dans une deuxième position par rapport à la première structure d'éclairage via le dispositif de réglage, dans lequel le connecteur fléchit en raison de la force appliquée par le dispositif de réglage à travers la deuxième structure d'éclairage et sur le connecteur, permettant ainsi à la deuxième structure d'éclairage de se déplacer dans la deuxième position.

9. Le procédé selon la revendication 8, dans lequel la fabrication de l'appareil d'éclairage comprend en outre la fabrication du cadre, de la première structure d'éclairage, de la deuxième structure d'éclairage et du connecteur en un seul corps monobloc.

10. Le procédé selon la revendication 8 ou 9, dans lequel le connecteur (118) comprend en outre un corps (200) positionné entre la première structure d'éclairage et la deuxième structure d'éclairage, le corps ayant un premier bord (202) connecté à la première structure d'éclairage (112) et un deuxième bord (208) connecté à la deuxième structure d'éclairage (116), le corps étant configuré pour fléchir lorsque la deuxième structure d'éclairage est ajustée par rapport à la première structure d'éclairage.

11. Le procédé selon l'une quelconque des revendications 8 à 10, dans lequel le dispositif de réglage comprend en outre :
un support de fixation (122) s'étendant depuis le cadre ;
un récepteur (124) s'étendant depuis la deuxième structure d'éclairage ; et
un élément de fixation fileté (126) s'étendant entre le récepteur et le support de fixation ;
dans lequel la rotation de l'élément de fixation fileté applique une force à la deuxième structure d'éclairage.

12. Le procédé selon la revendication 11, dans lequel le cadre, la première structure d'éclairage, la deuxième structure d'éclairage, le connecteur, le support de fixation et le récepteur sont fabriqués en un seul corps monobloc.

13. Le procédé selon la revendication 11 ou 12, dans lequel le réglage de la deuxième structure d'éclairage comprend en outre l'une des opérations suivantes choisies dans un groupe consistant en :
le serrage de l'élément de fixation fileté de sorte que l'élément de fixation tire le récepteur vers le support de fixation ; et
le desserrage de l'élément de fixation fileté de sorte que l'élément de fixation rétracte le récepteur loin du support de fixation.
